# EUROPÄISCHE PATENTSCHRIFT

(11) **EP 2 627 609 B1**
(45) Veröffentlichungstag und Bekanntmachung des Hinweises auf die Patenterteilung: **16.12.2015**
(21) Anmeldenummer: 11772879.0
(22) Anmeldetag: 05.10.2011
(51) Int. Cl.: C03B 5/167, C03B 5/43, C03B 7/02

(54) **REDUZIERUNG VON PT UND RH ABDAMPFVERLUSTEN BEI HOHEN TEMPERATUREN DURCH VERWENDUNG EINER SPERRSCHICHT**
REDUCTION OF Pt AND Rh EVAPORATION LOSSES AT HIGH TEMPERATURES BY USING A BARRIER LAYER
RÉDUCTION DES PERTES PAR ÉVAPORATION DE PT ET RH À DES TEMPÉRATURES ÉLEVÉES PAR UTILISATION D'UNE COUCHE BARRIÈRE

(30) Priorität: 11.10.2010 DE 102010047898
(43) Veröffentlichungstag der Anmeldung: 21.08.2013
(73) Patentinhaber: Heraeus Deutschland GmbH & Co. KG, 63450 Hanau (DE)
(72) Erfinder: LUKAS, Annette, 63517 Rodenbach (DE); LUPTON, David, Francis, 63571 Gelnhausen (DE); GÜBLER, Nicole, 61169 Friedberg (DE); MANHARDT, Harald, 63486 Bruchköbel (DE); BISSINGER, Mark, 63450 Hanau (DE); JANTSCH, Uwe, 63579 Freigericht (DE); VORBERG, Stefan, 63450 Hanau (DE)
(74) Vertreter: Kühn, Hans-Christian
(86) Internationale Anmeldenummer: PCT/EP2011/004960
(87) Internationale Veröffentlichungsnummer: WO 2012/048812

(56) Entgegenhaltungen:
- EP-A2- 1 722 008
- WO-A1-2011/136109
- DE-C1- 10 059 580
- FR-A1- 2 683 813
- US-A- 3 685 978
- US-A- 4 532 184
- US-A1- 2008 090 087

## Beschreibung

Die Erfindung betrifft den Schutz von Bauteilen aus Platin oder einer Pt-Legierung gegen Verlust durch Abdampfen im Einsatz in oxidierender Atmosphäre bei Temperaturen >1200 °C, insbesondere die Reduzierung von Pt- und Rh-Abdampfverlusten bei hohen Temperaturen durch Verwendung einer Sperrschicht.

### Definitionen

Unter Platin wird ein Platinwerkstoff verstanden, der industrieübliche Anteile weiterer Elemente enthalten kann. Das sind insbesondere nicht zu vermeidende Verunreinigungen.

Unter Platinlegierung oder Platinbasiswerkstoff wird eine Legierung mit Hauptanteil Platin, insbesondere über 75% Platin verstanden. Der Rest ist neben unvermeidlichen Verunreinigungen vorzugsweise Rhodium und/oder Iridium.

Unter Abdampfrate wird die Geschwindigkeit verstanden, mit der der Materialverlust eintritt. Sie lässt sich durch Masseverlust pro Betriebszeit ausdrücken.

### Technischer Hintergrund

Für die Herstellung hochwertiger Gläser, wie z. B. Alumo-Silikatgläser die in Form von dünnen Scheiben (0,6-0,8 mm) in LCD Fernseh-Geräten Einsatz finden, werden verschiedene Bauteile bzw. Anlagenkomponenten zum Schmelzen, Homogenisieren und Läutern eingesetzt. Diese sogenannten "Feedersysteme" bestehen aus mehreren senkrechten und waagerechten sowie winklig angesetzten Rohrsegmenten die miteinander mechanisch verbunden sind. Die Einsatztemperaturen liegen hier im Bereich von 1350°C bis zu knapp 1700°C. Die Platinbauteile werden mit keramischen Materialien umgeben die sowohl eine mechanische Stützfunktion als auch eine wärmeisolierende Funktion übernehmen. Ausgehend von der Pt-Oberfläche nimmt die Temperatur in der Keramik mit zunehmender Entfernung bei direkt beheizten Anlagen ab. Beispiele für solche in der Praxis verwendeten Keramikumkleidungen sind Faservliese oder feinkörnige Keramikschichten die eine relativ hohe offene Porosität aufweisen. Durch den unmittelbaren, engen Kontakt der inneren Keramikumkleidung zu den Pt-Bauteilen ist eine freie Luftkonvektion kaum möglich.

Die offene Porosität der umgebenen Keramikschichten reicht aus, um bei sehr hohen Temperaturen einen Abtrag der Pt-Oberfläche durch Formierung gasförmiger Pt-Komponenten insbesondere Pt-Oxide herbeizuführen und einen Abtransport der gasförmigen Pt-Komponenten von der Oberfläche weg durch die porösen Keramikschichten (siehe Skizze 1) bis der Niederschlag von metallischem Platin aus der Gasphase erfolgt.

Üblicherweise erfolgt der Niederschlag in einem Bereich von ca. 0,5 - 3 cm entfernt von der Pt-Oberfläche. Bei nicht formschlüssig an der Pt-Oberfläche anliegender Keramik kann die Pt-Abdampfraten durch zusätzliche Gaskonvektion deutlich beschleunigt werden. In diesem Fall wurden Pt-Niederschläge auch in unmittelbarer Nähe zum Bauteil beobachtet.

Eine umfangreiche Darstellung wissenschaftlicher Untersuchungen über die Abdampfverluste von Pt und den Metallen der Pt-Gruppe wurde von Jehn veröffentlicht (Hermann Jehn, "High Temperature Behaviour of Platinum Group Metals in Oxidizing Atmospheres", Journal of the Less Common Metals, 100, 1984, S. 321-339). Anhand der von Jehn veröffentlichten Werte würde man beispielsweise einen Wanddickenverlust bei 1600 °C unter einer Sauerstoffatmosphäre (1 bar) von 8-9 mm pro Jahr erwarten (bezogen auf eine Oberfläche - die andere Oberfläche ist normalerweise durch die Glasschmelze geschützt). Obwohl die Streuung in den von Jehn berichteten Werten aus Untersuchungen unter Luftatmosphäre größer ist, wären Wanddickenverluste von einigen mm pro Jahr an Luft zu erwarten. Demgegenüber erlebt man in der Praxis Wanddickenverluste von maximal einigen Zehntel Millimetern pro Jahr. Die geringeren Abdampfraten sind auf die Entstehung stabiler Diffusionsgrenzschichten an der Oberfläche des Pt-Bauteils zurückzuführen. Geschwindigkeitsbestimmend ist dann im Wesentlichen die Diffusion der Pt-Oxid-Spezies durch die Grenzschicht.

Stabile Diffusionsschichten werden in der Praxis auch dadurch ausgebildet, das keramische Schichten formschlüssig auf die Pt-Oberfläche aufgebracht werden. Dafür verwendet man keramische Vliese, oder man verfüllt Spalte zwischen dem Pt-Bauteil und den Keramiksteinen mit keramischen Granulaten oder Pulver. Die offene Porosität solcher Schichten ist groß genug, um einen Abtransport der gasförmigen Pt-Komponenten von der Pt-Oberfläche in die kältere Keramik zu erzeugen.

EP1337686A2 beschreibt beschichtete Metallteile in der Glasherstellung mit an der der Glasschmelze abgewandten Seite einer H₂ oder H₂ und O₂ undurchlässigen Schicht. EP1722008A2 beschreibt dementsprechend die Verwendung einer H₂ oder H₂ und O₂ undurchlässigen Schicht zum Beschichten von mit Glasschmelze in Berührung kommenden Bauteilen wie Rinnen, Schmelzwannen und Rohren zum Führen und Konditionieren von Glasschmelzen. Die Schicht die z.B. 40 bis 99 Gew.-% SiO₂ und 1 bis 30 Gew.-% Al₂O₃ enthält, ist bevorzugt ab 1 mm dick.

US 2008/0090087 A offenbart ein Pt-Bauteil mit einer Keramikschicht, beispielsweise aus SiO₂ und Al₂O₃ (erste Schicht) und einer weiteren Schicht (zweite Schicht) aus Glas. Die zweite Schicht wird als Sol vorbereitet und auf die erste Schicht gesprüht. Durch die Beschichtung kann das Abdampfen von Platin vermindert werden. Außerdem ist die Schicht flexibel, so dass sie nicht abplatzt.

Es ist bekannt, dass haftfeste, keramische Schichten, z.B. ZrO₂ oder Al₂O₃ mittels z.B. Flammspritzen auf die Oberfläche von Pt und PtRh-Bauteilen aufgebracht werden können.

Dadurch wird die offene Porosität, die üblicherweise durch Faservliese oder Pulverschichten erreicht werden, reduziert und die Abdampfraten können ebenfalls gesenkt werden. Die Erhaltung einer offenen Porosität in der Schicht ist zum einen prozessbedingt gegeben, zum anderen platzen unflexible, porenfreie Schichten beim Aufheizen der Bauteile durch ihre unterschiedlich starke thermische Ausdehnung zum Pt bzw. PtRh leicht ab.

Bei langen Laufzeiten der Pt-Bauteile kann es so zu einer deutlichen Reduzierung der Wanddicke kommen. Das hat eine geringere Stabilität der Bauteile die dadurch vorzeitig ausfallen können zur Folge. Außerdem wird die unmittelbar wiederverwertbare Edelmetallmenge nach Außerbetriebnahme der Bauteile reduziert, was mit zusätzlichen Kosten für den Anwender verbunden ist.

### Aufgabe

Ziel der Erfindung ist es, die nach längerer Einsatzzeit beobachtete Abnahme der Wanddicke von Bauteilen bzw. Anlagenteilen, die aus Pt oder dessen Legierungen bestehen, zu vermeiden bzw. zu reduzieren. Insbesondere soll es ermöglicht werden, ein Platinbauteil bei 1650 °C für bis zu 2 Jahren einzusetzen.

Dabei sind eine oder mehrere der folgenden Tatsachen und Anforderungen bei der Aufgabenstellung zu berücksichtigen:
- Nur weitgehend gasdichte Strukturen verhindern die Oxidation von Platin.
- Platin bildet mit einigen Elementen niedrig schmelzende Eutektika, die eine sofortige Bauteilzerstörung bewirken.
- Unterschiede im Wärmeausdehnungskoeffizient der Komponenten führen zu Spannungen, wodurch Mikrorisse und Abplatzungserscheinungen auftreten.
- Verwendete Materialien sollten schmelzmetallurgisch durch Schlackebildung vom Edelmetall zu trennen sein (Recyclingkosten).
- Kohlenstoffhaltige Materialien müssen, wegen ihrer reduzierenden Wirkung, vermieden werden.
- Verwendete Materialien müssen langzeittemperaturstabil sein.
- Reaktionen mit der Ofenausmauerung müssen ausgeschlossen werden.
- Das Verfahren muss auf ein Bauteil von großer und komplexer Geometrie (bis 6 m Bauteilgröße) applizierbar sein (Flammspritzverfahren sind dafür zurzeit ungeeignet).
- Der Wärmeeintrag darf nicht behindert werden.
- Die Wärmeverluste dürfen nicht zunehmen.
- Das Temperaturprofil im Bauteil darf nicht beeinflusst werden.

### Die Erfindung

Die Aufgabe wird durch ein Bauteil nach Anspruch 1 und ein Verfahren nach Anspruch 12 gelöst. Bevorzugte Ausführungsformen sind den weiteren Ansprüchen zu entnehmen.

Die Abdampfverluste werden durch Auftragung einer Sperrschicht, die für gasförmige Pt-Komponenten (hauptsächlich PtO₂) undurchlässig ist, vermieden bzw. reduziert, insbesondere durch folgende Maßnahmen:
1. Durch Auftragen einer porösen, festhaftenden Oxidkeramik- oder Quarz-Schicht und Infiltrieren dieser mit einer zweiten Komponente, so dass die offene Porosität der ersten, porösen Oxidkeramik- oder Quarzschicht durch den Infiltranten teilweise oder vollständig ausgefüllt wird. Der Infiltrant liegt nach einem Trocknungsvorgang bei geringer Temperatur in Form eines feinstkörnigen Pulvers oder Nanopulvers in den Poren der ersten Oxidkeramikschicht vor.
   Durch diese Anwendung wird sichergestellt, dass die Oxidkeramikschicht beim Aufheizen auf Einsatztemperatur nicht von der Platinoberfläche abplatzt, aber dennoch eine äußerst geringe, offene Restporosität, die durch Porendurchmesser < 1 µm gekennzeichnet sind, verbleibt. Die Flexibilität der Schicht bleibt so auch bei Temperaturänderungen während des Betriebs oder partieller Abkühlung bei Reparaturen an der Schmelzlinie erhalten.
2. Eine Alternative zu dem unter Punkt 1 beschriebenen Infiltranten ist eine Infiltrant, der beim Aufheizen auf Einsatztemperatur weich wird und die Poren der Erstschicht verschließt.
3. Eine weitere Alternative zu dem unter Punkt 1 beschriebenen Infiltranten ist eine Infiltrant, der beim Aufheizen - bei sehr hohen Temperaturen - mit der keramischen Erstschicht mindestens partiell eine Glasphase bildet, die zu einer vollständigen Bedeckung der freien Oberfläche des Pt-Bauteils führt.

Auf die infiltrierte Erstschicht nach 1.-3. kann ein Sauerstoff-Gettermaterial aufgebracht werden, um den Sauerstoffpartialdruck zu senken. Geeignete Gettermaterialien sind dem Fachmann bekannt und basieren z.B. auf Zirkonium oder Yttrium.

Die offenporöse Schicht ist Quarz oder eine Oxidkeramik. Beispiele dafür sind die Oxidkeramik der Gruppe bestehend aus: Al₂O₃; ZrO₂, Zirkonsilikat, SiO2.ZrO2; SiO₂, HfO₂ ; CaO; MgO; Oxide der Seltenerdmetalle; sowie Mischungen der genannten Materialien.

Die offenporöse Schicht kann auch eine aggregierte oder zusammengebackene Ansammlung von Partikeln sein.

Der Infiltrant kann ebenfalls eine Oxidkeramik sein oder der Gruppe der Glasbildner angehören, z.B. Siliciumdioxid (SiO₂), Bortrioxid (B₂O₃), Phosphorpentoxid (P₂O₅), Diarsentrioxid, auch Arsenik genannt (As₂O₃), Germaniumdioxid (GeO₂), Diaantimonpentoxid (Sb₂O₅) sowie Mischungen der genannte Materialien. Es könne auch verschiedene Körnungen desselben Materials als Oxidkeramik und als Infiltrant miteinander kombiniert sein. Der Infiltrant hat dabei die geringere Korngröße, nämlich im Nanobereich, so dass er niedriger schmilzt. Geeignet sind feinteilige Kieselsäuren (Aerosil®) mit Primär-Partikelgrößen von 3- bis 200 nm, bevorzugt 3-50 nm.

In einer besonders bevorzugten Ausführungsform dient ein keramisches Gewebe als Stützgerüst, welches mit einen artgleichen keramischen Material benetzt ist, das bei Einsatztemperatur eine schmelzflüssige Schicht als Sauerstoffdiffusionsbarriere bildet. Diese Barriere verhindert die Reaktion von metallischem Platin zu Platinoxid; Platin kann nicht in Oxidform abdampfen. Um Reaktionen mit der Ofenausmauerung zu verhindern, folgen bevorzugt weitere Trenn- und Schutzschichten, vorzugsweise eine Zirkonoxid-Gewebeschicht und darüber ein Aluminiumsilikat-Vlies.

### Vorteile

Neben den längeren Standzeiten der Platin-Anlagenteile ist ein weiterer Vorteil für die Glasindustrie, daß die transportierte Glasschmelze bei höheren Temperaturen geführt werden kann. Mit steigender Temperatur nimmt die Viskosität des Glases ab, und die Läuterung (Entgasung) gelingt effizienter und schneller. Infolge dieses Vorteils können kürzere Durchlaufzeiten erzielt und die Anlagengröße reduziert werden.

### Abbildungen

Fig. 1 zeigt den Querschnitt eine Anordnung gemäß dem Stand der Technik.
Fig. 2 zeigt als zusätzliches Merkmal die erfindungsgemäße, infiltrierte Schutzschicht.
Fig. 3 zeigt die bevorzugte Ausführungsform mit zusätzlichen äußeren Schichten.
Fig. 4 zeigt den Materialverlust von Platinbauteilen mit und ohne Schutzschichtsystem.

### Beispielhafte Ausführungsformen

Die folgenden Beispiele erläutern die Erfindung näher, ohne sie zu beschränken. Teile- und Prozentangaben beziehen sich auf das Gewicht, sofern nicht anders angegeben.

### Beispiel 1

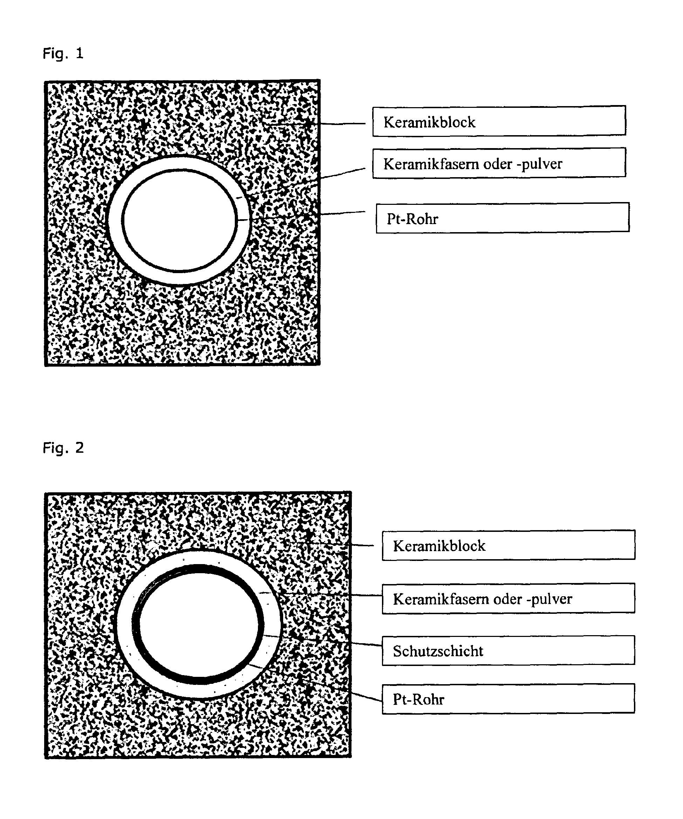

Die in Fig. 2 im Querschnitt dargestellte Anordnung zeigt ein von Keramikfasern oder Pulver und einem Keramikblock umgebenes glasführendes Rohr, das im Gegensatz zum Stand der Technik (Fig. 1) von einer Schicht aus folgenden Bestandteilen umgeben ist:
Offenporöses Material: Al₂O₃.
Infiltrant: SiO₂ 60% und B₂O₃ 40%
Die Schicht wird die durch folgende Behandlungsschritte aufgebracht:
   i) Flammspritzen der Rohroberfläche mit Al₂O₃.Pulver. Das Flammspritzen eignet sich wie eingangs beschrieben nur für Bauteile mit einfacher Geometrie.
   ii) Eintauchen in eine Suspension von Zirkonsilikat in Wasser.
   iii) Thermisches Trocknen.

### Beispiel 2

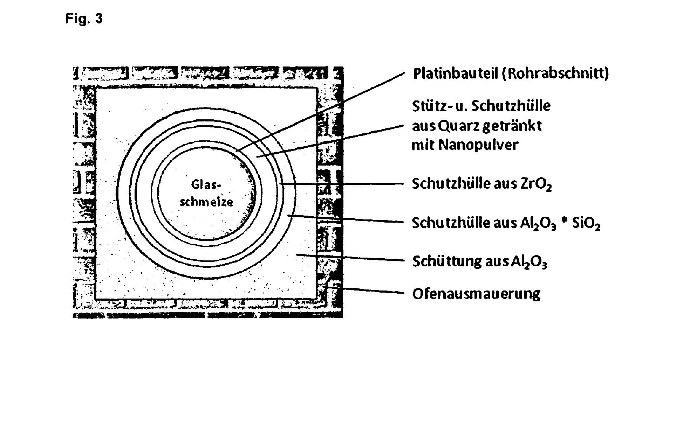

Unter Berücksichtigung der Parameter der Aufgabenstellung wurde ein mehrschichtiges Schutzschichtsystem entwickelt (Fig. 3).

Um in diesem System mögliche Dehnungs- und Spannungsrisse zu vermeiden, wird das Bauteil mit einem flexiblen keramischen Quarztextilgewebe umhüllt; dieses dient u.a. als Stützgerüst, welches Spannungen aufnimmt. Das Quarztextilgewebe wird mit artgleichem Nano-Material definierter Korngröße infiltriert (benetzt). Dabei handelt es sich vorzugsweise um feinteilige Kieselsäuren (Aerosil®) mit Primär-Partikelgrößen von 3- bis 200 nm, bevorzugt 3-50 nm. Bei der Einsatztemperatur ist dieses infiltrierte Material schmelzflüssig und verschließt als Schmelze die Poren des Quarztextilgewebes wodurch eine gasdichte Schutzhülle erzeugt wird. Diese verhindert, dass Sauerstoff an die Platin-Oberfläche gelangt und dort mit diesem zu Platinoxid reagieren kann, welches dann abdampft.

Um diese Schutzhülle vor Reaktionen mit der Umgebung zu schützen, wird zusätzlich ein hochschmelzendes Zirkonoxidtextilgewebe aufgebracht. Eine weitere Funktion dieser Zirkonoxidschutzhülle ist es, das Abdampfen von Siliziumdioxid bzw. Siliziummonoxid zu verhindern. Des Weiteren verhindert eine abschließende Schutzschicht aus Aluminiumsilikat (als Vlies) Reaktionen mit dem Schüttgutmaterial der Keramik-Ausmauerung.

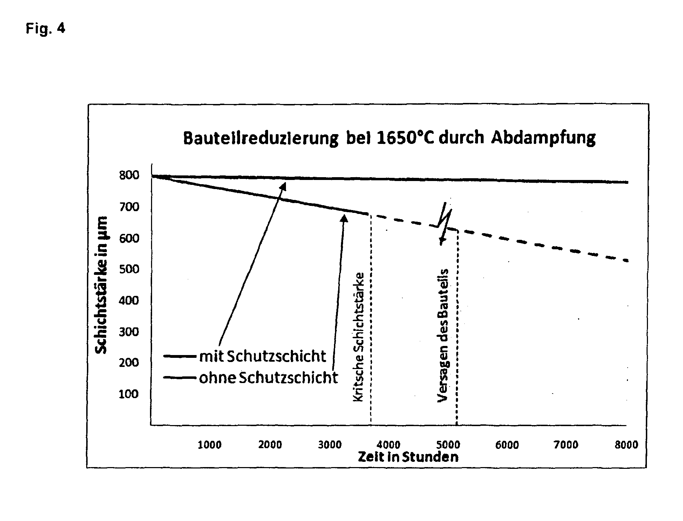

Der Materialverlust ist in Fig. 4 dargestellt. Die obere, ungestrichelte Gerade zeigt den geringen Verlust mit Schutzschicht. Die darunterliegende, stärker abfallende Gerade zeigt den Materialverlust ohne Schutzschicht, wobei der gestrichelte Teil den kritischen Bereich bis zum Versagen des Bauteils durchläuft.

## Patentansprüche

1. Gegen Verlust durch Abdampfen im Einsatz in oxidierender Atmosphäre bei Temperaturen >1200 °C geschütztes Bauteil aus Platin oder einer Pt-Legierung, dessen bei Betrieb mit oxidierender Atmosphäre in Kontakt kommende äußere Oberfläche mit einer offenporösen Oxidkeramik- oder Quarzschicht bedeckt ist, deren Poren ein bei Einsatztemperatur schmelzendes Material als Infiltrant enthalten, wobei der Infiltrant als feinstkörniges oder nanopartikuläres Material mit einem mittleren Partikeldurchmesser der Primärteilchen von 3 bis 50 nm vorliegt.

2. Bauteil nach Anspruch 1, wobei der Infiltrant ein Glasbildner ist und bei Einsatztemperaturen > 1200° C mit der Oxidkeramik- oder Quarzschicht mindestens partiell eine Glasphase bildet, die zu einer vollständigen Bedeckung der freien Oberfläche des Bauteils führt.

3. Bauteil nach Anspruch 1, wobei die Oxidkeramik- oder Quarzschicht aus Oxiden der Gruppe bestehend aus Al₂O₃; ZrO₂, Zirkonsilikat, SiO₂.ZrO₂; SiO₂,; HfO₂ ; CaO; MgO; Oxide der Seltenerdmetalle; sowie Mischungen der genannten Materialien besteht.

4. Bauteil nach Anspruch 1, wobei der Infiltrant materialgleich mit der Oxidkeramik- oder Quarzschicht ist.

5. Bauteil nach Anspruch 1, wobei der Infiltrant mit der Oxidkeramik- oder Quarzschicht ein schmelzbares Gemisch bildet.

6. Bauteil nach Anspruch 2, wobei der Glasbildner der Gruppe bestehend aus Siliciumdioxid (SiO₂) Bortrioxid (B₂O₃) Phosphorpentoxid (P₂O₅) Germaniumdioxid (GeO₂) und Diantimonpentoxid (Sb₂O₅) sowie Mischungen der genannte Materialien angehört.

7. Bauteil nach einem der vorstehenden Ansprüche, wobei die Oxidkeramik- oder Quarzschicht aus Fasern besteht.

8. Bauteil nach Anspruch 7, wobei die Fasern als Gewebe, Gewirk Gestrick oder Vlies vorliegen.

9. Bauteil nach einem der vorstehenden Ansprüche, wobei auf der Oxidkeramik- oder Quarzschicht eine weitere Schicht aus Zirkonoxid-Gewebe angeordnet ist.

10. Bauteil nach Anspruch 9, wobei auf der Schicht aus Zirkonoxid-Gewebe ein Vlies aus Aluminiumsilikat angeordnet ist.

11. Bauteil nach einem der vorstehenden Ansprüche, wobei die Oxidkeramik- oder Quarzschicht mit einem Sauerstoff-Getter versehen ist, um den Sauerstoffpartialdruck zu senken.

12. Verfahren zur Verringerung der Abdampfrate aus Platin und Pt-Legierungen in oxidierender Atmosphäre, aufweisend die Schritte
A. Aufbringen einer offenporösen Quarz- oder Oxidkeramikschicht auf ein Bauteil aus Platin oder einer Pt-Legierung,
B. Infiltrieren der Quarz- oder Oxidkeramikschicht mit einem Material, das bei Einsatztemperatur des Bauteils schmilzt, wobei die Porenräume der offenporösen Oxidkeramikschicht durch das Infiltrat teilweise oder vollständig ausgefüllt werden, und wobei der Infiltrant als feinstkörniges oder nanopartikuläres Material mit einem mittleren Partikeldurchmesser der Primärteilchen von 3 bis 50 nm vorliegt.
C. Einsatz bei Temperaturen von > 1200°C.

13. Verfahren nach Anspruch 12, wobei das Aufbringen der Quarz- oder Oxidkeramikschicht durch Aufsprühen oder Umwickeln erfolgt.

14. Verfahren nach Anspruch 12, wobei das Aufbringen der Quarz- oder Oxidkeramikschicht durch Umwickeln mit einem Quarz- oder Oxidkeramikgewebe erfolgt.

## Claims

1. Component made of platinum or a Pt alloy that is protected against evaporation in use in an oxidising atmosphere at temperatures > 1,200°C, whose outer surface, which in use contacts the oxidising atmosphere, is covered by an open-pore oxide ceramic layer or quartz layer, whose pores contain, as infiltrating substance, a material that melts at operating temperature, whereby the infiltrating substance is present as an ultra-fine grain or nano-particulate material with a mean particle diameter of the primary particles of 3 to 50 nm.

2. Component according to claim 1, whereby the infiltrating substance is a glass former and forms, together with the oxide ceramic layer or quartz layer, a glass phase, at least partially, at operating temperatures > 1,200°C that leads to full coverage of the exposed surface of the component.

3. Component according to claim 1, whereby the oxide ceramic layer or quartz layer consists of oxides from the group consisting of Al₂O₃; ZrO₂; zirconium silicate, SiO₂.ZrO₂; SiO₂, HfO₂; CaO; MgO, oxides of the rare earth metals; as well as mixtures of said materials.

4. Component according to claim 1, whereby the infiltrating substance consists of the same material as the oxide ceramic layer or quartz layer.

5. Component according to claim 1, whereby the infiltrating substance and the oxide ceramic layer or quartz layer together form a meltable mixture.

6. Component according to claim 2, whereby the glass former belongs to the group consisting of silicon dioxide (SiO₂), boron trioxide (B₂O₃), phosphorus pentoxide (P₂O₅), germanium dioxide (GeO₂), and diantimony pentoxide (Sb₂O₅) as well as mixtures of said materials.

7. Component according to any one of the preceding claims, whereby the oxide ceramic layer or quartz layer consists of fibres.

8. Component according to claim 7, whereby the fibres are present as woven fabric, knitted fabric or non-woven fabric.

9. Component according to any one of the preceding claims, whereby a further layer made of zirconium oxide woven fabric is arranged on the oxide ceramic layer or quartz layer.

10. Component according to claim 9, whereby a non-woven fabric made of aluminium silicate is arranged on the layer made of zirconium oxide woven fabric.

11. Component according to any one of the preceding claims, whereby the oxide ceramic layer or quartz layer is provided with an oxygen getter in order to reduce the partial pressure of oxygen.

12. Method for reducing the evaporation rate of platinum and Pt alloys in an oxidising atmosphere, comprising the steps of
A. applying an open-pore quartz layer or oxide ceramic layer onto a component made of platinum or a Pt alloy;
B. infiltrating into the quartz layer or oxide ceramic layer a material that melts at the operating temperature of the component, whereby the pore spaces of the open-pore oxide ceramic layer are filled partially or completely by the infiltrating substance, and whereby the infiltrating substance is present as an ultra-fine grain or nano-particulate material with a mean particle diameter of the primary particles of 3 to 50 nm;
C. use at temperatures of > 1,200°C.

13. Method according to claim 12, whereby the quartz layer or oxide ceramic layer is applied by spraying or wrapping.

14. Method according to claim 12, whereby the quartz layer or oxide ceramic layer is applied by being wrapped with a quartz or oxide ceramic woven fabric.

## Revendications

1. Élément en platine ou en alliage de platine, protégé contre les pertes par évaporation lors de l'utilisation en atmosphère oxydante à des températures >1200 °C, dont la surface extérieure, qui vient en contact avec une atmosphère oxydante lors de l'exploitation et du fonctionnement, est recouverte d'une couche de céramique oxydique ou de quartz à pores ouverts, qui contiennent en tant qu'agent d'infiltration une matière qui fond à la température d'utilisation, l'agent d'infiltration étant une matière nanoparticulaire ou à grains ultrafins, dont le diamètre moyen des particules primaires est de 3 à 50 nm.

2. Élément selon la revendication 1, **caractérisé en ce, que** l'agent d'infiltration soit un vitrifiant et que ce vitrifiant forme à des températures d'utilisation > 1200 °C avec la couche de céramique oxydique ou de quartz au moins partiellement une phase vitreuse, qui génère un recouvrement intégral de la surface libre de l'élément.

3. Élément selon la revendication 1, **caractérisé en ce, que** la couche de céramique oxydique ou de quartz soit composée d'oxydes du groupe comportant les matières Al₂0₃, ZrO2, silicate de zirconium, SiO₂.ZrO₂, SiO₂, HfO₂, CaO, MgO, oxydes des métaux des terres rares, ou des mélanges des matières citées.

4. Élément selon la revendication 1, **caractérisé en ce, que** l'agent d'infiltration soit de même matière que celle de la couche de céramique oxydique ou de quartz.

5. Élément selon la revendication 1, **caractérisé en ce, que** l'agent d'infiltration forme avec la couche de céramique oxydique ou de quartz un mélange fusible.

6. Élément selon la revendication 2, **caractérisé en ce, que** le vitrifiant fasse partie du groupe comportant les matières dioxyde de silicium (SiO₂), trioxyde de dibore (B₂O₃), pentoxyde de phosphore (P₂O₅), bioxyde de germanium (GeO₂) et pentaoxyde de diantimoine (Sb₂O₅) ainsi que des mélanges des matières citées.

7. Élément selon l'une des revendications précédentes, **caractérisé en ce, que** la couche de céramique oxydique ou de quartz soit composée de fibres.

8. Élément selon la revendication 7, **caractérisé en ce, que** les fibres soient disponibles en tant que tissu, étoffe ou tricot à mailles ou en toison.

9. Élément selon l'une des revendications précédentes, **caractérisé en ce qu'**une autre couche en tissu d'oxyde de zirconium soit située sur la couche de céramique oxydique ou de quartz.

10. Élément selon la revendication 9, **caractérisé en ce, qu'**une toison en silicate d'aluminium soit située sur la couche en tissu d'oxyde de zirconium.

11. Élément selon l'une des revendications précédentes, **caractérisé en ce que** la couche de céramique oxydique ou de quartz comporte un absorbeur d'oxygène pour abaisser la pression partielle en oxygène.

12. Procédé de réduction des taux d'évaporation de platine et d'alliages de platine sous atmosphère oxydante, comportant les étapes suivantes
A. application d'une couche de quartz ou de céramique oxydique à pores ouverts sur un élément en platine ou en alliage de platine,
B. infiltration dans la couche de quartz ou de céramique oxydique d'une matière qui fond à la température d'utilisation de l'élément, de sorte que les cavités des pores de la couche de céramique oxydique à pores ouverts se remplissent partiellement ou entièrement de l'agent d'infiltration, qui est disponible en tant que matière nanoparticulaire ou à grains ultrafins, dont le diamètre moyen des particules primaires est de 3 à 50 nm ;
C. utilisation à des températures > 1200 °C.

13. Procédé selon la revendication 12, **caractérisé en ce, que** l'application de la couche de quartz ou de céramique oxydique s'effectue par pulvérisation ou par enveloppement.

14. Procédé selon la revendication 12, **caractérisé en ce, que** l'application de la couche de quartz ou de céramique oxydique s'effectue par enveloppement avec un tissu de quartz ou de céramique oxydique.
